# EUROPÄISCHE PATENTSCHRIFT

(11) **EP 0 694 176 B1**
(45) Veröffentlichungstag und Bekanntmachung des Hinweises auf die Patenterteilung: **04.10.2001**
(21) Anmeldenummer: 95908186.0
(22) Anmeldetag: 08.02.1995
(51) Int. Cl.: G02B 21/08

(54) **KONDENSORSYSTEM FÜR MIKROSKOPE**
CONDENSER SYSTEM FOR A MICROSCOPE
SYSTEME CONDENSEUR POUR MICROSCOPE

(30) Priorität: 11.02.1994 DE 4404283
(43) Veröffentlichungstag der Anmeldung: 31.01.1996
(73) Patentinhaber: Leica Microsystems Wetzlar GmbH, 35578 Wetzlar (DE)
(72) Erfinder: KRÜGER, Rolf, D-35510 Butzbach (DE); STANKEWITZ, Hans-Werner, D-35579 Wetzlar (DE); GEHRMANN, Ute, D-35516 Münzenberg (DE); EUTENEUER, Peter, D-35633 Lahnau (DE)
(74) Vertreter: Stamer, Harald, Dipl.-Phys.
(86) Internationale Anmeldenummer: DE9500160
(87) Internationale Veröffentlichungsnummer: WO9522072

(56) Entgegenhaltungen:
- EP-A- 0 029 955
- WO-A-94/07169
- US-A- 3 790 254

## Beschreibung

Die Erfindung betrifft ein Kondensorsystem für eine Phasen-kontrast-Beleuchtung bei Mikroskopen gemäß dem Oberbegriff des Patentanspruchs 1 und ein Kondensorsystem für eine Interferenz-kontrast-Beleuchtung für Mikroskope gemäß dem Oberbegriff des Patentanspruchs 2.

Bei Kondensorsystemen für eine Phasenkontrast-Beleuchtung bei Mikroskopen ist es bekannt, verschiedene Kondensoren mit einem speziell auf jeden einzelnen Kondensor abgestimmten Lichtringsatz zu verwenden. Ein Lichtringsatz enthält einzelne Lichtringe mit unterschiedlichen Lichtringdurchmessem. Üblicherweise ist es bei Mikroskopen mit verschiedenen Objektiven unterschiedlicher Vergrößerung notwendig, mehrere verschiedene Lichtringe mit unterschiedlichen Durchmessern pro Kondensor zur Verfügung zu stellen. Diese Kombination aus Kondensor und Lichtringsatz mußte bisher in mechanisch aufwendiger Weise im Beleuchtungsstrahlengang angeordnet werden. Die Anordnung des Lichtringsatzes mit der zugehörigen Kondensoroptik im Beleuchtungsstrahlengang erfolgte in einer bekannten Ausführungsform dadurch, daß der Lichtringsatz zusammen mit der Kondensoroptik in einem separaten Revolver angeordnet wurde. Bei einem Wechsel der Kondensoroptik wurde der gesamte Revolver ausgetauscht. Dazu war es jedoch notwendig, die Austausch-Führungen des Revolvers und die Führungen am Mikroskop präzise zu fertigen und darüber hinaus Justierelemente zur Zentrierung des Kondensors zur Verfügung zu stellen. Neben dem beträchtlichen Fertigungsaufwand für derartige wechselbare Revolver ist es bei dieser bekannten Lösung auch nachteilig, daß zu jeder Kondensoroptik ein spezieller Lichtringsatz in einem speziellen Revolver zur Verfügung gestellt werden muß.

Aus der DE 23 37 653 ist ein Kondensorsystem für eine Phasenkontrast-Beleuchtung bei Mikroskopen bekannt, bei dem mehrere Kondensoren mit gleicher Brennweite und mit unterschiedlichen freien Arbeitsabständen dargestellt und beschrieben sind. Durch diese spezielle Kondensorreihe läßt sich ein einziger Lichtringsatz für die unterschiedlichen Kondensoren verwenden.

Die beschriebene Kondensorreihe kann jedoch in der Praxis nur eingeschränkt verwendet werden, da nur ein maximal 5,5 mm betragender freier Arbeitsabstand optisch realisierbar ist Bei größeren Abständen, bis zu 70 mm, wie sie bei Invers-Mikroskopen durch die Betrachtung von Objekten in Petri-Schalen, Mikrotiterplatten, Kulturflaschen u.ä. zwingend notwendig sind, läßt sich aus optischen Gründen keine konstante Brennweite der verschiedenen Kondensoroptiken realisieren.

Bei bekannten Kondensorsystemen für eine Interferenzkontrast-Beleuchtung bei Mikroskopen besteht ebenfalls das Problem, daß die sehr teuren Wollastonprismen auf die verwendeten Objektive unterschiedlicher Vergrößerung und Kondensoroptiken angepaßt werden müssen. So werden auch hier zu jeder Kondensoroptik mehrere speziell angefertigte Prismen benötigt, die ebenfalls in einer dem Kondensor vorgeschalteten Revolverscheibe angeordnet sind. Dabei ist die Verwendung der Prismen abhängig von den jeweiligen Vergrößerungen bzw. Brennweiten der Objektive und Kondensoroptiken.

Es ist daher Aufgabe der vorliegenden Erfindung, ausgehend vom bekannten Stand der Technik, ein Kondensorsystem für eine mikroskopische Phasenkontrast-Beleuchtung anzugeben, welches bei unterschiedlichen Brennweiten der Kondensoroptiken die Verwendung eines einzigen Satzes von Lichtringen ermöglicht.

Diese Aufgabe wird erfindungsgemäß durch die im kennzeichnenden Teil des Patentanspruchs 1 angegebenen Merkmale gelöst.

Eine weitere Aufgabe der Erfindung ist es, ausgehend vom bekannten Stand der Technik, ein Kondensorsystem für eine mikroskopische Interferenzkontrast-Beleuchtung anzugeben, welches bei unterschiedlichen Brennweiten der Kondensoroptiken die Verwendung eines einzigen Satzes von Wollastonprismen ermöglicht.

Diese Aufgabe wird erfindungsgemäß durch die im kennzeichnenden Teil des Patentanspruchs 2 angegebenen Merkmale gelöst.

Vorteilhafte Weiterbildungen der Erfindung sind Gegenstand der Unteransprüche.

Bei der vorliegenden Erfindung wird ein Kondensorsystem mit mehreren Kondensoren mit jeweils unterschiedlicher Brennweite und unterschiedlich großem Arbeitsabstand zum Objekt zur Verfügung gestellt. Die Kondensoroptiken weisen untereinander einen gemeinsamen Vergrößerungsfaktor auf. Den Kondensoroptiken ist ein einziger Lichtringsatz zugeordnet, der einzelne Lichtringe mit unterschiedlichen mittleren Lichtringdurchmessem aufweist.

Die Abstufungen zwischen den einzelnen Durchmessern sind an den gemeinsamen Faktor der Brennweiten der Kondensoroptiken angepaßt. Dadurch wird erreicht, daß die verschiedenen Lichtringe innerhalb eines Lichtringsatzes bei den unterschiedlichen Kondensoroptiken verwendet werden können.

Bei der Interferenzkontrast-Beleuchtung werden die Kondensoroptiken mit unterschiedlicher Brennweite und mit unterschiedlichem Arbeitsabstand zum Objekt verwendet. Der auch hier gemeinsame Vergrößerungsfaktor der Kondensoroptiken ist hier an den gemeinsamen Vergrößerungsfaktor zwischen den einzelnen Betrachtungsobjektiven angepaßt.

Durch diese Maßnahme lassen sich die kondensorseitig angeordneten Wollastonprismen für alle Kondensor-/Betrachtungsoptik- Kombinationen ohne aufwendige Nachrüstung, Umbau oder Justage verwenden.

Bei einer geeigneten Wahl eines gemeinsamen Vergrößerungsfaktors für die Betrachtungsobjektive und die Kondensoroptiken und den resultierenden Lichtringdurchmessem, läßt sich ein System schaffen, das sowohl für die Phasenkontrast- als auch die Interferenzkontrast-Beleuchtung gemeinsam nutzbar ist.

Eine Ausführungsform der Erfindung, die dies in vorteilhafterweise erfüllt, wird anhand der schematischen Zeichnungen in einem Ausführungsbeispiel näher erläutert.

### In den Zeichnungen zeigen:

- Fig. 1: einen Beleuchtungsstrahlengang für ein Inversmikroskop mit einer darin angeordneten Revolver-Scheibe und mit einer Kondensoroptik
- Fig. 2: einen Lichtring in Aufsicht
- Fig. 3: eine Prinzipdarstellung eines Phasenkontrast-Beleuchtungsstrahlenganges
- Fig. 4: eine Prinzipdarstellung eines Interferenzkontrast-Beleuchtungsstrahlenganges
- Fig. 5: die verschiedenen Übemahmemöglichkeiten von Lichtringen bei unterschiedlichen Kondensoren
- Fig. 6: die verschiedenen Übemahmemöglichkeiten von Wollastonprismen bei unterschiedlichen Kondensor/Objektivkombinationen

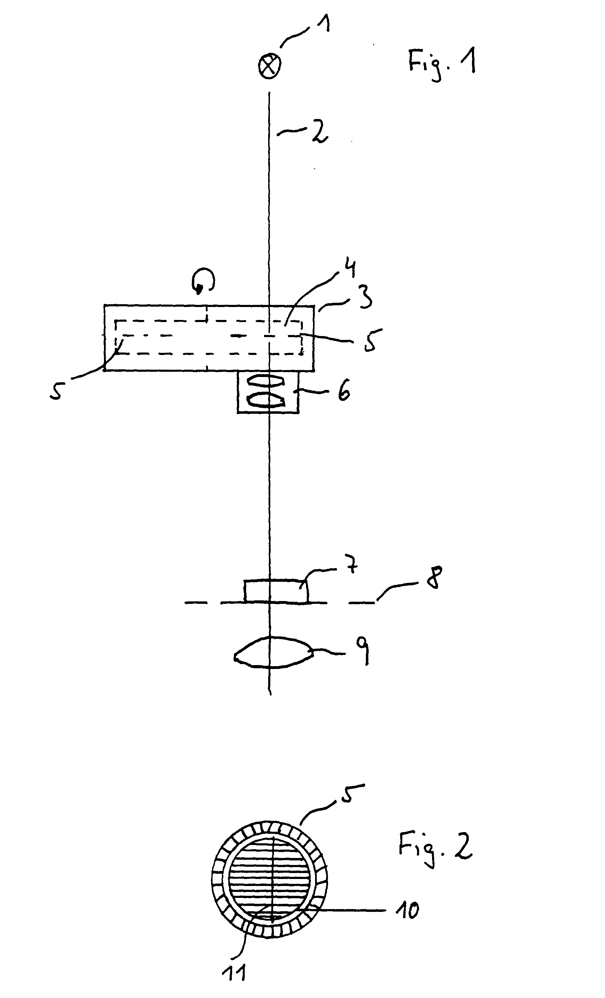

Die Figur 1 zeigt einen Beleuchtungsstrahlengang 2 für ein nicht mit dargestelltes Inversmikroskop mit einer Lichtquelle 1 und einer Aufnahme 3. In dieser Aufnahme 3 ist eine Revolverscheibe 4 drehbar angeordnet. Die Revolverscheibe 4 dient zur Aufnahme eines Lichtringsatzes aus einzelnen Lichtringen 5 und (nicht mit dargestellt) der Aufnahme eines Satzes aus einzelnen Wollastonprismen 16. Die Aufnahme 3 dient femer als Halter für eine an der Aufnahme 3 wechselbar befestigte Kondensoroptik 6. In dieser Darstellung ist im weiteren Verlauf des Beleuchtungsstrahlenganges 2 die Objektebene 8 mit dem Objekt 7 und dem nachgeordneten Objektiv 9 gezeigt.

Über die drehbar gelagerte Revolverscheibe 4 lassen sich die einzelnen Lichtringe 5 bzw. Wollastonprismen 16 nacheinander in den Beleuchtungsstrahlengang 2 einbringen. Die Kondensoroptik 6 kann über eine nicht mit dargestellte Verschraubung an der Aufnahme 3 gegen eine andere Kondensoroptik 6 ausgetauscht werden.

In der Figur 2 ist ein Lichtring 5 in einer Aufsicht dargestellt. Der Lichtring 5 ist üblicherweise durch seine schraffiert gezeichneten opaken Flächen und seine transparente, ringförmige Fläche 10 gekennzeichnet. Der mittlere Durchmesser des Lichtringes 5 ist durch die Bezugsziffer 11 gekennzeichnet.

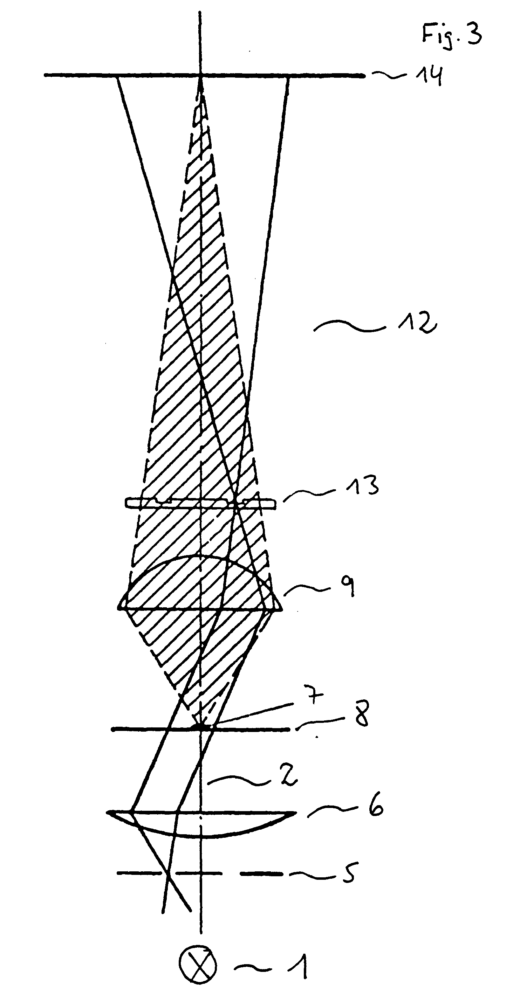

In der Figur 3 ist eine Prinzipskizze einer möglichen Phasenkontrastbeleuchtung 12 dargestellt. Das von der Lichtquelle 1 kommende Licht tritt durch die ringförmige Öffnung des Lichtringes 5 und wird mit der Kondensoroptik 6 parallel ausgerichtet. Dieses Parallelstrahlenbündel durchsetzt die Objektebene 8 und wird über das Objektiv 9 auf eine Phasenplatte 13 fokussiert. Die Phasenplatte 13 kann beispielsweise als planparallele Glasplatte mit einer ringförmigen Ätzung, einem Phasenring, ausgebildet sein, auf die der Lichtring 5 abgebildet wird. Über die Phasenplatte 13 wird die Phase dieses Lichtes gegenüber dem vom Objekt kommenden Licht verschoben. Von der Phasenplatte 13 aus divergiert das Strahlenbündel in die Abbildungsebene 14 (Zwischenbildebene). Das vom Objekt 7 gebeugte Licht (schraffiert dargestellt) wird über das Objektiv 9 und die Phasenplatte 13 geführt und in der Ebene 14 fokussiert abgebildet. Dadurch wird erreicht, daß die Phasenänderung des Lichtes, bedingt durch das Objekt 7, in eine Intensitätsänderung des Lichtes in der Abbildungsebene 14 umgewandelt wird.

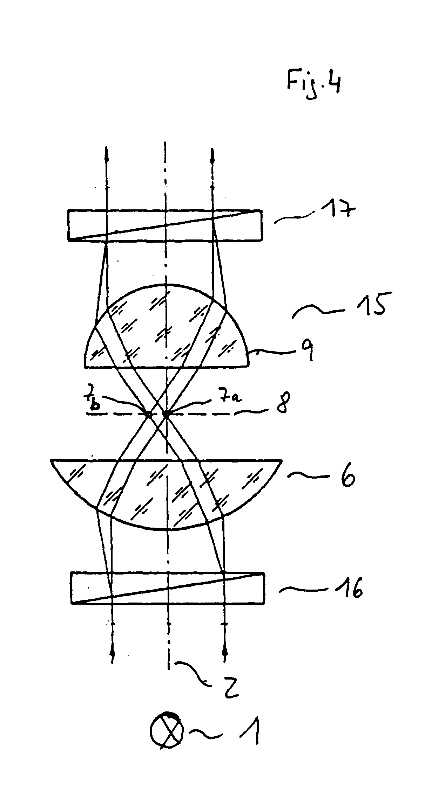

Die Figur 4 zeigt eine Prinzipskizze einer Interferenzkontrast-Beleuchtung 15 mit einer Lichtquelle 1, einem kondensorseitig angeordneten Wollastonprisma 16, einer Kondensoroptik 6, einer Objektebene 8 mit den benachbarten Objektpunkten 7a, 7b und der Vergrößerungsoptik 9. Dieser Optik 9 ist ein objektivseitiges Wollastonprisma 17 nachgeordnet. Bei der hier dargestellten Beleuchtungsanordnung werden die von der Lichtquelle 1 kommenden Strahlen am Wollastonprisma 16 in zwei einzelne Strahlen aufgespalten, von denen jeder Strahl einen benachbarten Objektpunkt 7a und 7b beleuchtet. Über das Wollastonprisma 17 werden die beiden einzelnen Strahlen wieder zusammengeführt und interferieren. Über die daraus resultierenden Gangunterschiede lassen sich Rückschlüsse auf die Brechzahl und Dicke der Objekte ziehen.

Bei dem vorliegenden Kondensorsystem ist es bei einer Phasenkontrast-Beleuchtung notwendig, die mittleren Durchmesser 11 der einzelnen Lichtringe 5 auf die verwendeten Kondensorbrennweiten anzupassen. Bei einer Ausgangsbrennweite F₀ von 12 mm und 1 mm freiem Arbeitsabstand zum Objekt 7 für die Kondensoroptik 6 und einem Faktor von X=2 und n=0,1,2 ... ergibt sich nach der Formel Fₙ = F₀ * Xⁿ für weiteren Kondensoroptiken F₁ und F₂ eine Brennweite von 24 mm mit 23 mm freiem Arbeitsabstand und 48 mm mit 70 mm freiem Arbeitsabstand. Aus diesem Brennweitenverhältnis lassen sich die mittleren Durchmesser 11 der Lichtringe 5 nach der Formel Dₙ = D₀ * Xⁿ berechnen. Es ist bekannt, daß der Ausgangsdurchmesser D₀ der Lichtringe 5 in der Praxis angenähert dem halben Durchmesser der Objektivapertur betragen soll. Ausgehend von diesem Wert wird D₀ mit 1.35 mm festgelegt. Anhand der Formel und dem gewählten Brennweitenverhältnis der Kondensoroptiken 6 ergeben sich für die Lichtringe die mittleren Durchmesser von D₀=1.35 mm, D₁=2.7 mm, D₂=5.4 mm und D₃=10.8 mm.

Bei einer derartigen Ausgestaltung der Brennweiten der Kondensoroptiken 6 und der Durchmesser der einzelnen Lichtringe 5, lassen sich alle Lichtringe D₀ - D₃ bei dem Kondensor F₁ verwenden. Eine Nutzung der Lichtringe D₁-D₃ ergibt sich für den Kondensor F₂, während bei der Kondensoroptik F₀ die Lichtringe mit den Durchmessem D₀-D₂ eingesetzt werden können.

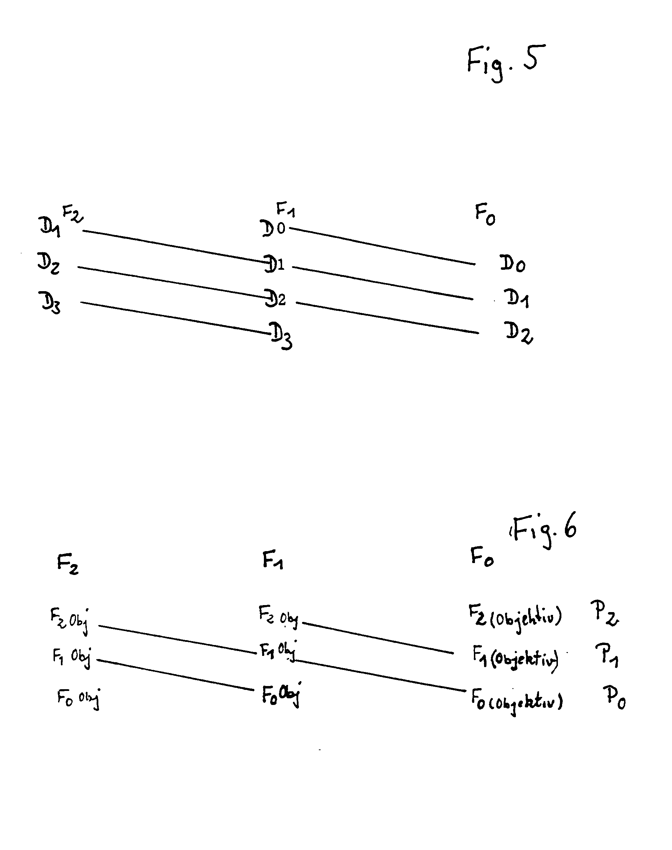

In der Figur 5 sind die verschiedenen Übemahmemöglichkeiten skizzenhaft dargestellt, wobei die F₀-F₂ die Brennweiten der Kondensoroptiken und D₀-D₃ die einzelnen Lichtringdurchmesser kennzeichnen.

Mit dieser Staffelung bei den Kondensoren 6 und Lichtringen 5 kann somit in optimierter Art und Weise auf die Verwendung von mehreren Lichtringsätzen verzichtet werden. Dadurch ergibt sich auch der Vorteil, daß die einzelnen Lichtringe des Lichtringsatzes nicht mehr ausgetauscht werden müssen und somit der Mehraufwand bei nachstellbaren Justagen entfallen kann. Die Aufnahme 3 mit der Revolverscheibe wird lediglich in der Fertigung positioniert und fest mit dem Mikroskop verbunden.

Bei einer Interferenzkontrast-Beleuchtung ist das o.a. Brennweitenverhältnis zwischen den einzelnen Kondensoroptiken 6 besonders vorteilhaft, da bei dieser Beleuchtungsart eine feste Beziehung zwischen den Vergrößerungsverhältnissen der Kondensoren 6 und den verschiedenen Vergrößerungen der Objektive 9 besteht.

Ausgehend von den o.a. Brennweiten der Kondensoroptiken 6, lassen sich die Brennweiten der Objektive 9 berechnen. Gemäß der Formel F_{n(Objektiv)} = F_{0(Objektiv)} * Xⁿ ergibt sich die Objektivreihe bzw. die Kondensorreihe, bei einer Ausgangsbrennweite von F_{0(Objektiv)}= 5mm, F_{1(Objektiv)}= 10mm, F_{2(Objektiv)}= 20mm und F_{3(Objektiv)}= 40mm. Diese Brennweiten entsprechen einem üblicherweise verwendeten Objektivsatz mit Objektiven 40x, 20x, 10x und 5x.

Ausgehend von vorhandenen Objektivreihen unterschiedlicher Vergrößerung lassen sich natürlich auch anhand der o.a. Formeln die einzelnen Brennweiten der Kondensoren bestimmen.

Das für das Objektiv 40x = 5mm Brennweite ausgelegte Wollastonprisma läßt wegen der gleichen Vergrößerungsverhältnisse zwischen den Kondensoren und Objektiven sowohl bei den Objektiven F₀ / Kondensor F=12 mm als auch bei dem Objektiv F₁ */* Kondensor F=24mm und Objektiv F₂ / Kondensor F=48 mm verwenden. Bei anderen Objektiv / Kondensorkombinationen können die weiteren abgestimmten Wollastonprismen analog eingesetzt werden. Mit nur drei verschiedenen Wollastonprismen lassen sich somit alle o.a. Objektiv / Kondensor-Kombinationen erreichen.

In der Figur 6 sind die verschiedenen Übemahmemöglichkeiten skizzenhaft dargestellt, wobei F₀-F₂ die Brennweiten der einzelnen Kondensoroptiken, F_{0(Objektiv)}-F_{2(Objektiv)} die einzelnen Brennweiten der Objektive und P₀-P₂ die verschiendenen Wollastonprismen kennzeichnen. Das Prisma P₀ kann demnach in der Kombination F₀/F_{0(Objektiv)}, F₁/F_{1(Objektiv)} und F₂/F_{2(Objektiv)} verwendet werden.

Das hier beschriebene Kondensorsystem ist neben der optimierten Verwendung eines einzigen Lichtringsatzes auch auf die Verwendung von Wollastonprismen optimiert.

Die Erfindung ist natürlich nicht auf das beschriebene vorteilhafte Ausführungsbeispiel beschränkt. Andere Vergrößerungsverhältnisse lassen sich selbstverständlich gemäß den angegebenen Formeln leicht übertragen.

### Bezugszeichenliste

1 - Lichtquelle
2 - Beleuchtungsstrahlengang
3 - Aufnahme
4 - Revolverscheibe
5 - Lichtring
6 - Kondensoroptik
7 - Objekt
7a, 7b - benachbarte Objektpunkte
8 - Objektebene
9 - Objektiv
10 - transparenter Teil des Lichtringes 5
11 - mittlerer Durchmesser des Lichtringes 5
12 - Phasenkontrast-Beleuchtung
13 - Phasenplatte
14 - Abbildungsebene
15 - Interferenzkontrast-Beleuchtung
16 - Wollastonprisma
17 - Wollastonprisma

## Patentansprüche

1. Wechselbares Kondensorsystem für eine Phasenkontrast-Beleuchtung (12) bei Mikroskopen mit einer Kondensoroptik (6) und dieser zugeordneten, auf einer Revolverscheibe (4) angeordneten unterschiedlichen Lichtringen (5), **dadurch gekennzeichnet, daß** die Kondensoroptik (6) unabhängig von den Lichtringen (5) wechselbar ist, wobei die Brennweiten Fₙ der Kondensoroptiken (6) im Verhältnis Fₙ = F₀ * Xⁿ und die mittleren Durchmesser Dₙ der Lichtringe (5) im Verhältnis Dₙ = D₀ * Xⁿ zueinander gewählt werden, mit X > 0, n = 0,1,2,3...., F₀ = Ausgangsbrennweite und D₀ = Ausgangsdurchmesser.

2. Wechselbares Kondensorsystem für eine Interferenzkontrast-Beleuchtung (15) bei Mikroskopen mit einer Kondensoroptik (6) und dieser zugeordneten, auf einer Revolverscheibe (4) angeordneten unterschiedlichen Wollastonprismen (16) und mit mehreren Objektiven (9) unterschiedlicher Vergrößerung und Brennweite, **dadurch gekennzeichnet, daß** die Kondensoroptik (6) und die Objektive (9) unabhängig von den Wollastonprismen (16) wechselbar sind, wobei die Brennweiten Fₙ der Kondensoroptiken (6) im Verhältnis Fₙ = F₀ * Xⁿ und die Brennweiten der Objektive (9) mit dem gleichen Brennweitenverhältnis zueinander gewählt werden, wie die Kondensoroptiken, mit X > 0, n = 0,1,2,3...., und F₀ = Ausgangsbrennweite.

3. Wechselbares Kondensorsystem nach Anspruch 1 oder Anspruch 2, **dadurch gekennzeichnet, daß** X=2, F₀ = 12 mm und D₀ = 2.7 mm beträgt.

4. Wechselbares Kondensorsystem nach Anspruch 1 - 3, **dadurch gekennzeichnet, daß** zur Umschaltung von einer Phasenkontrast-Beleuchtung (12) auf eine Interferenzkontrast-Beleuchtung (15) die Lichtringe (5) und die Wollastonprismen (16) in verschiedenen Aufnahmen derselben Revolverscheibe (4) angeordnet sind.

5. Wechselbares Kondensorsystem nach Anspruch 1 - 4, **dadurch gekennzeichnet, daß** drei Kondensoroptiken (6) und vier Lichtringe (5) und /oder drei Wollastonprismen (16) vorgesehen sind.

## Claims

1. Exchangeable condensor system for a phase contrast illumination (12) in microscopes, comprising a condensor optical system (6) and different light rings (5) associated therewith and mounted on a revolver disc (4), **characterised in that** the condensor optical system (6) is exchangeable independently of the light rings (5), wherein the focal widths Fₙ of the condenser optical system (6) are selected to be in the ratio Fₙ = F₀*Xⁿ to one another and the mean diameters Dₙ of the light rings (5) are selected to be in the ratio Dₙ = D₀ * Xⁿ to one another, wherein X > 0, n = 1, 2, 3 ..., F₀ = starting focal width and D₀ = starting diameter.

2. Exchangeable condenser system for an interference contrast illumination (15) in microscopes with a condenser optical system (6) and different Wollaston prisms associated therewith and arranged on a revolver disc (4) and with several objectives (6) of different magnification and focal width, **characterised in that** the condenser optical system (6) and the objective (9) are exchangeable independently of the Wollaston prisms (16), wherein the focal widths Fₙ of the condensor optical systems (6) are selected to be in the ratio Fₙ = F₀ * Xⁿ to one another and the focal widths of the objective (9) are selected to be in the same focal width ratio to one another as the condensor optical systems, wherein X > 0, n = 1, 2, 3, ..., and F₀ = starting focal width.

3. Exchangeable condensor system according to claim 1 or claim 2, **characterised in that** X = 2, F₀ = 12 mm and D₀ = 2.7 mm.

4. Exchangeable condenser system according to claim 1 to 3, **characterised in that** for switching over from a phase contrast illumination (12) to an interference contrast illumination (15) the light rings (5) and the Wollaston prisms (16) are arranged in different mounts of the same revolver disc (4).

5. Exchangeable condenser system according to claim 1 to 4, **characterised in that** three condenser optical systems (6) and four light rings (5) and/or three Wollaston prisms (16) are provided.

## Revendications

1. Système condenseur échangeable pour un éclairage à contraste de phase (12) dans des microscopes avec une optique de condenseur (6) et des anneaux de lumière différents (5) associés à celle-ci, disposés sur un plateau de révolver, **caractérisé en ce que** l'optique de condenseur (6) est échangeable indépendamment des anneaux de lumière (5), où les distances focales Fₙ des optiques de condenseur (6) sont sélectionnées selon un rapport Fₙ=Fₒ*Xⁿ et les diamètres moyens Dₙ des anneaux de lumière (5) selon le rapport Dₙ=Dₒ*Xⁿ les uns aux autres, avec X>0,n=0,1,2,3..., Fₒ=distance focale initiale et Dₒ=diamètre initial.

2. Système condenseur échangeable pour un éclairage à contraste interférentiel (15) dans des microscopes avec une optique de condenseur (6) et différents prismes de Wollaston (16) associés à celle-ci, disposés sur un plateau de révolver (4) et avec plusieurs objectifs (9) d'un agrandissement et distance focale différents, **caractérisé en ce que** l'optique de condenseur (6) et les objectifs (9) sont échangeables indépendamment des prismes de Wollaston (16), où les distances focales Fₙ des optiques de condenseur (6) sont sélectionnées selon le rapport Fₙ=Fₒ*Xⁿ et les distances focales des objectifs (9) avec le même rapport des distances focales l'une à l'autre, comme les optiques de condenseur, avec X>0,n=0,1,2,3..., et Fₒ=distance focale initiale.

3. Système condenseur échangeable selon la revendication 1 ou la revendication 2, **caractérisé en ce que** X=2, Fₒ=12 mm et Dₒ=2,7 mm.

4. Système condenseur échangeable selon la revendication 1 à 3, **caractérisé en ce que** pour la commutation d'un éclairage à contraste de phase (12) à un éclairage à contraste intérférentiel (15), les anneaux de lumière (5) et les prismes de Wollaston (16) sont disposés dans des logements différents du même plateau de révolver (4).

5. Système condenseur échangeable selon la revendication 1 à 4, **caractérisé en ce que** sont prévues trois optiques de condenseur (6) et quatre anneaux de lumière (5) et/ou trois prismes de Wollaston (16).
